# EUROPEAN PATENT APPLICATION

(11) **EP 4 318 997 A1**
(43) Date of publication of application: **07.02.2024**
(21) Application number: 22778687.8
(22) Date of filing: 23.03.2022
(51) Int. Cl.: H04L 1/06, H04W 72/04

(54) **CSI FEEDBACK METHOD, RELATED DEVICE AND READABLE STORAGE MEDIUM**

(30) Priority: 30.03.2021 CN 202110340904
(71) Applicant: Vivo Mobile Communication Co., Ltd., Dongguan, Guangdong 523863 (CN)
(72) Inventor: YUAN, Jiangwei, Dongguan, Guangdong 523863 (CN); SONG, Yang, Dongguan, Guangdong 523863 (CN); TAMRAKAR, Rakesh, Dongguan, Guangdong 523863 (CN); DU, Hao, Dongguan, Guangdong 523863 (CN)
(74) Representative: Lavoix
(86) International application number: PCT/CN2022/082467
(87) International publication number: WO 2022/206504

(57) **Abstract**

This application discloses a CSI feedback method, a related device, and a readable storage medium, and pertains to the field of communication technologies. The method of this application may include: obtaining, by a terminal, N CSI report configurations, where the N CSI report configurations are used for determining M pieces of first information; and sending, by the terminal, a first CSI report, where the first CSI report is calculated based on the M pieces of first information, the first information is any one of the following: first reference signal resource, and first parameter corresponding to the first reference signal resource; N is a positive integer; and M is an integer greater than 1.

## Description

### CROSS-REFERENCE TO RELATED APPLICATIONS

This application claims priority to Chinese Patent Application No. 202110340904.9, filed in China on March 30, 2021, which is incorporated herein by reference in its entirety.

### TECHNICAL FIELD

This application pertains to the field of communication technologies, and specifically relates to a CSI feedback method, a related device, and a readable storage medium.

### BACKGROUND

In the prior art, for a single-transmission and reception point (Single-Transmission and Receiving Point, STRP) channel state information (Channel State Information, CSI) report, a network-side device configures a CSI report configuration (also referred to as or CSI-ReportConfig) corresponding to that TRP, and a terminal calculates the STRP CSI report based on CSI resources configured in the CSI report configuration corresponding to that TRP.

However, there is currently no solution for how to calculate a multi-transmission and reception point (Multi-Transmission and Receiving Point, MTRP) CSI report.

### SUMMARY

Embodiments of this application provide a CSI feedback method, a related device, and a readable storage medium, so as to address the issue of calculating MSTP CSI reports.

According to a first aspect, a CSI feedback method is provided, where the method includes:
obtaining, by a terminal, N CSI report configurations, where the N CSI report configurations are used for determining M pieces of first information; and
sending, by the terminal, a first CSI report, where the first CSI report is calculated based on the M pieces of first information; where
the first information is any one of the following: first reference signal resource, and first parameter corresponding to the first reference signal resource; N is a positive integer; and M is an integer greater than 1.

According to a second aspect, a CSI feedback method is provided, including:
sending, by a network-side device, N CSI report configurations, where the N CSI report configurations are used for determining M pieces of first information; and
receiving, by the network-side device, a first CSI report, where the first CSI report is calculated based on the M pieces of first information; where
the first information is any one of the following: first reference signal resource, and first parameter corresponding to the first reference signal resource; N is a positive integer; and M is an integer greater than 1.

According to a third aspect, a CSI feedback apparatus is provided, including:
a first obtaining module configured to obtain N CSI report configurations, where the N CSI report configurations are used for determining M pieces of first information; and
a first sending module configured to send a first CSI report, where the first CSI report is calculated based on the M pieces of first information; where
the first information is any one of the following: first reference signal resource, and first parameter corresponding to the first reference signal resource; N is a positive integer; and M is an integer greater than 1.

According to a fourth aspect, a CSI feedback apparatus is provided, including:
a second sending module configured to send N CSI report configurations, where the N CSI report configurations are used for determining M pieces of first information; and
a first receiving module configured to receive a first CSI report, where the first CSI report is calculated based on the M pieces of first information; where
the first information is any one of the following: first reference signal resource, and first parameter corresponding to the first reference signal resource; N is a positive integer; and M is an integer greater than 1.

According to a fifth aspect, a terminal is provided, where the terminal includes a processor, a memory, and a program or instructions stored in the memory and capable of running on the processor, and when the program or instructions are executed by the processor, the steps of the method according to the first aspect are implemented.

According to a sixth aspect, a terminal is provided, including a processor and a communication interface, where the processor is configured to obtain N CSI report configurations, where the N CSI report configurations are used for determining M pieces of first information; and the communication interface is configured to send a first CSI report, where the first CSI report is calculated based on the M pieces of first information; where the first information is any one of the following: first reference signal resource, and first parameter corresponding to the first reference signal resource; N is a positive integer; and M is an integer greater than 1.

According to a seventh aspect, a network-side device is provided. The network-side device includes a processor, a memory, and a program or instructions stored in the memory and capable of running on the processor. When the program or instructions are executed by the processor, the steps of the method according to the second aspect are implemented.

According to an eighth aspect, a network-side device is provided, including a processor and a communication interface, where the communication interface is configured to: send N CSI report configurations, where the N CSI report configurations are used for determining M pieces of first information; and receive a first CSI report, where the first CSI report is calculated based on the M pieces of first information; where the first information is any one of the following: first reference signal resource, and first parameter corresponding to the first reference signal resource; N is a positive integer; and M is an integer greater than 1.

According to a ninth aspect, a readable storage medium is provided, where a program or instructions are stored in the readable storage medium, and when the program or the instructions are executed by a processor, the steps of the method according to the first aspect are implemented, or the steps of the method according to the second aspect are implemented.

According to a tenth aspect, a chip is provided, where the chip includes a processor and a communication interface, the communication interface is coupled to the processor, and the processor is configured to run a program or instructions to implement the steps of the method according to the first aspect or the steps of the method according to the second aspect.

According to an eleventh aspect, a computer program/program product is provided, where the computer program/program product is stored in a non-transitory storage medium, and the program/program product is executed by at least one processor to implement the steps of the method according to the first aspect or the steps of the method according to the second aspect.

According to a twelfth aspect, a communication device is provided, configured to perform the steps of the method according to the first aspect or the steps of the method according to the second aspect.

In the embodiments of this application, the network-side device may send one or more CSI report configurations to the terminal for determining M first reference signal resources or M first parameters, where the first parameters correspond to the first reference signal resources; and the terminal may calculate a CSI report, that is, an MTRP CSI report, based on the M first reference signal resources or the M first parameters. In this way, the calculation of the MTRP CSI report is realized. Additionally, resource overheads for configuring CSI report configurations can also be reduced in a case that the MTRP CSI report is calculated based on M pieces of first information configured in one CSI report configuration.

### BRIEF DESCRIPTION OF DRAWINGS

FIG. 1 is a schematic diagram of a wireless communication system according to an embodiment of this application;
FIG. 2 is a first flowchart of a CSI feedback method according to an embodiment of this application;
FIG. 3 is a second flowchart of a CSI feedback method according to an embodiment of this application;
FIG. 4 is a first structural diagram of a CSI feedback apparatus according to an embodiment of this application;
FIG. 5 is a second structural diagram of a CSI feedback apparatus according to an embodiment of this application;
FIG. 6 is a structural diagram of a communication device according to an embodiment of this application;
FIG. 7 is a structural diagram of a communication device according to an embodiment of this application; and
FIG. 8 is a structural diagram of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, "and/or" in the specification and claims represents at least one of connected objects, and the character "/" generally indicates that the contextually associated objects have an "or" relationship.

It is worth noting that the technologies described in the embodiments of this application are not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

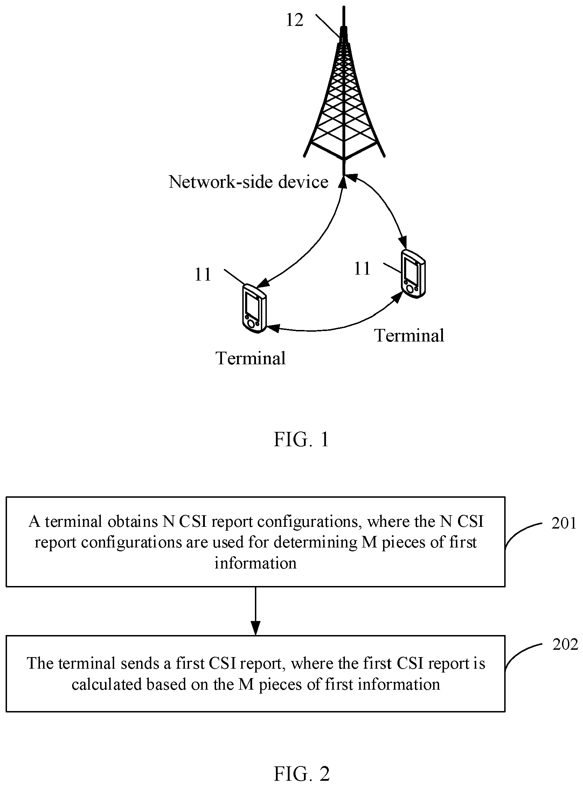

FIG. 1 is a schematic diagram of a wireless communication system to which an embodiment of this application is applicable. The wireless communication system includes a terminal 11 and a network-side device 12. The terminal 11 may also be referred to as a terminal device or user equipment (User Equipment, UE). The terminal 11 may be a terminal-side device, such as a mobile phone, a tablet computer (Tablet Computer), a laptop computer (Laptop Computer) or notebook computer, a personal digital assistant (Personal Digital Assistant, PDA), a palmtop computer, a netbook, an ultra-mobile personal computer (Ultra-Mobile Personal Computer, UMPC), a mobile internet device (Mobile Internet Device, MID), a wearable device (Wearable Device), vehicular user equipment (VUE), or pedestrian user equipment (PUE). The wearable device includes a smartwatch, a wrist band, earphones, glasses, and the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a WLAN access point, a Wi-Fi node, a transmission reception point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example, although the specific type of the base station is not limited.

For ease of understanding, the following describes some contents included in the embodiments of this application:

### 1. Multi transmission and reception point (Transmission and Receiving Point, TRP) transmission technology

The standard has introduced a multi-transmission and reception point (multi-TRP)/multi-panel scenario, to improve transmission reliability and throughput performance. For example, the UE can receive same data or different data from a plurality of TRPs.

An ideal backhaul or a non-ideal backhaul exists between a plurality of TRPs.

For the non-ideal backhaul, there is a relatively long latency in exchange of information between the plurality of TRPs. It is more suitable for independent scheduling, where response information (for example, acknowledgement (Acknowledgement, ACK) or negative acknowledgement (Negative Acknowledgement, NACK)) and channel state information (Channel State Information, CSI) reports are reported to each TRP separately. Generally, the non-ideal backhaul is suitable for multiple downlink control information (Downlink Control Information, DCI) scheduling, that is, each TRP sends its own physical downlink control channel (Physical Downlink Control Channel, PDCCH), and each PDCCH schedules its own physical downlink shared channel (Physical Downlink Shared Channel, PDSCH), and multiple control resource sets (Control Resource Set, CORESET) configured for UE are associated with different radio resource control (Radio Resource Control, RRC) parameters, namely control resource set pool indexes (CORESET Pool Index), and correspond to different TRPs. A plurality of PDSCHs scheduled by a plurality of DCIs may not overlap, partially overlap, or completely overlap in time-frequency resources. On the overlapping time-frequency resources, each TRP performs independent precoding based on its own channel, and the UE receives multi-layer data streams belonging to a plurality of PDSCHs in non-coherent joint transmission (Non-Coherent Joint Transmission, NCJT) mode.

For the ideal backhaul, scheduling information and UE feedback information can be exchanged between the plurality of TRPs in real time, and ACK/NACK and CSI reports can be reported to any one TRP. In addition to scheduling multiple PDSCHs using multiple DCIs, it is also possible to schedule PDSCHs using a single DCI. The transmission schemes are as follows:

Space division multiplexing (Space Division Multiplexing, SDM): Different data layers of a same transport block (Transport Block, TB) come from NCJT transmissions of different TRPs.

Frequency division multiplexing (Frequency-Division Multiplexing, FDM): Different frequency domain resources mapped by a same redundant version (Redundant Version, RV) of a same TB are sent from different TRPs or different RVs of a same TB are mapped to different frequency domain resources and sent from different TRPs.

Time division multiplexing (Time Division Multiplexing, TDM): Different repetitions of different RVs of a same TB come from different TRPs, for example, repetitions within one slot or repetitions within multiple slots.

### 2. CSI report configuration of a single TRP (also known as CSI reporting setting or CSI-ReportConfig)

- Periodic CSI (P-CSI) report: transmitted only on a physical uplink control channel (Physical Uplink Control Channel, PUCCH).
- Semi-persistent CSI (SP-CSI) report: transmitted on a PUCCH or a physical uplink shared channel (Physical Uplink Shared Channel, PUSCH).
- Aperiodic CSI (AP-CSI) report: transmitted only on a PUSCH.

### 3. Fields (field) in CSI report configuration

A CSI report configuration may include the following fields:
(1) Report configuration identity (reportConfigID) field: indicates an identity (for example, ID) of the current reporting setting.
(2) Carrier field: indicates a serving cell in which s CSI resource configuration (CSI-ResourceConfig) can be found. If this field is unavailable, a reference signal resource is configured in a same service unit as the reporting setting.
(3) Resources for channel measurement (resourcesForChannelMeasurement) field: indicates a non-zero power CSI-reference signal (Non-Zero Power CSI-Reference Signal, NZP-CSI-RS) resource setting ID used for channel measurement.
(4) CSI interference measurement resource (csi-IM-ResourcesForInterference) field: indicates a CSI interference measurement (CSI-Interference Measurement, CSI-IM) resource setting ID used for interference measurement.
(5) NZP-CSI-RS interference measurement resource (nzp-CSI-RS-ResourcesForInterference) field: indicates an NZP-CSI-RS resource setting ID used for interference measurement.
(6) Report configuration type (reportConfigType) field: indicates a type of the reporting setting (periodic, semi-persistent, or aperiodic).
(7) Report quantity (reportQuantity) field: indicates the quantities that may be included in the CSI report.
(8) Report frequency configuration (reportFreqConfiguration) field: indicates a band (wideband or subband) measured for the CSI report.
(9) Time restriction for channel measurements (timeRestrictionForChannelMeasurements) field: indicates time domain measurement restriction for channel (signal) measurement. If this field is not configured, the UE should obtain, based only on NZP-CSI-RS, a channel measurement for calculating a CSI value of the report, not later than a CSI reference resource, where the NZP-CSI-RS is no later than a CSI reference resource associated with the CSI resource setting. If this field is configured, the UE obtains, based on an NZP CSI RS that is most recently transmitted and no later than a CSI reference resource associated with the CSI resource setting, a channel measurement used for calculating a CSI value of the report.
(10) Time restriction for interference measurements (timeRestrictionForInterferenceMeasurements) field: indicates time domain measurement restriction for interference measurement. If this field is not configured, the UE should obtain, based only on CSI-IM and/or NZP-CSI-RS, a channel measurement for calculating a CSI value of the report, not later than a CSI reference resource, where the CSI-IM and/or NZP-CSI-RS is no later than a CSI reference resource associated with the CSI resource setting. If this field is configured, the UE obtains, based on CSI-IM and/or NZP CSI RS that is most recently transmitted and no later than a CSI reference resource associated with the CSI resource setting, a channel measurement used for calculating a CSI value of the report.
(11) Codebook configuration (codebookConfig) field: indicates a type (type) 1 or type 2 codebook configuration, including codebook subset restriction. The "network" does not configure both "codebookConfig" and "codebookConfig-r16" for a terminal.
(12) Dummy field: indicates that this field that is not used in the specification. If such field is received, the UE will ignore it.
(13) Group-based beam reporting (groupBasedBeamReporting) field: indicates activation/deactivation of beam group-based beam report.
(14) Channel quality indicator table (cqi-Table) field: indicates which channel quality indicator (Channel Quality Indicator, CQI) table is used for CQI calculation.
(15) Subband size (subbandSize) field: indicates one of the two possible subband size values. If csi-ReportingBand is not present, the terminal will ignore this field.

Non-precoding matrix indicator (Precoding Matrix Indicator, PMI) port indication (non-PMI-PortIndication) field: indicates a port indication used for rank indicator (Rank Indicator, RI) or CQI calculation. For CSI-RS resources used for channel measurement in ResourceConfig, this field indicates which ports are used for rank R transmission. This field is only applicable to non-PMI feedback.

### 4. CSI measurement

(1) The measurement resources are as follows:
   - Interference measurement based on CSI-IM
   - Interference measurement and channel measurement based on NZP CSI-RS
(2) Periodicity and slot offset (slot offset):
   - For periodic and semi-persistent CSI-RSs, the periodicity and slot offset are configured by RRC signaling.
   - Semi-persistent NZP CSI-RS/CSI-IM is activated and deactivated using a media access control (Media Access Control, MAC) control element (Control Element, CE).
   - Aperiodic CSI-RS is triggered by DCI. Candidate values of slot offset for the CSI-RS are independently configured for each resource set in the measurement resource setting by RRC signaling, and one of these candidate values is indicated as a CSI-RS transmission occasion by DCI signaling.

If CSI-IM is used for interference measurement, each channel measurement CSI-RS resource is associated with one CSI-IM resource based on the sequence of the CSI-RS resources and CSI-IM resources in corresponding resource sets. The quantity of channel measurement CSI-RS resources is the same as the quantity of interference measurement CSI-RS resources.

UE can assume that there is the same reception spatial information between the channel measurement NZP CSI-RS resource and interference measurement CSI-IM resource in one report setting.

The UE can assume that there is the same reception spatial information between the channel measurement NZP CSI-RS resource and interference measurement NZP CSI-RS resource in one report setting.

### 5. Potential CSI framework for multi-TRP

(1) Multiple CSI reporting settings can be configured, and the resource setting of each reporting setting corresponds to one TRP, meaning that each CSI reporting setting corresponds to a CSI report of one TRP.
(2) One CSI reporting setting can be configured. By default or as indicated, multiple CSI resource settings or multiple CSI resources are used jointly (together) to calculate one CSI report.

### 6. NZP-CSI RS

As indicated by higher layer parameters, CSI resource configuration (CSI-ResourceConfig) and NZP-CS-RS resource set (NZP-CSI-RS-ResourceSet), UE can configure one or more NZP CSI-RS resource set configurations, each NZP CSI-RS resource set consisting of K (K≥1) NZP CSI-RS resources.

Except for NZP CSI-RS resources used for interference measurement, the CSI-RS resource configurations in a same resource set are configured with the same density and the same port quantity. The UE expects that all CSI-RS resources in one resource set are configured with the same start resource block (Resource Block, RB), the same RB quantity, and the same code division multiplexing (Code Division Multiplexing, CDM) type.

The UE can assume that in one report config, one or more NZP CSI-RS resources for channel measurement and one or more CSI-IM resources for interference measurement or multiple NZP CSI-RS resources for interference measurement have a "QCL-TypeD" quasi-co-location (Quasi Co-Location, QCL) relationship at the resource level.

The UE can assume that in one report config, one or more NZP CSI-RS resources for channel measurement and one or more CSI-IM resources for interference measurement have a "QCL-TypeD" quasi-co-location (Quasi Co-Location, QCL) relationship at the resource level.

If NZP CSI-RS is used for interference measurement, the UE may expect no more than one NZP CSI-RS resource is configured for channel measurement, and may expect no more than NZP CSI-RSs corresponding to 18 ports are configured in one NZP CSI-RS resource set for interference measurement.

### 7. Resource setting configuration

(1) For aperiodic CSI, each CSI-ReportConfig can be configured with one or more periodic, semi-persistent, or aperiodic resource settings.

In a case that one resource setting is configured, this resource setting is used for layer 1 (Layer 1, L1) L1-reference signal received power (Reference Signal Received Power, RSRP) channel measurement or L1-signal-to-noise and interference ratio (Signal-to-Noise and Interference Ratio, SINR) channel and interference measurement.

In a case that two resource settings are configured, the first resource setting is used for channel measurement, and the second resource setting is used for interference measurement (which may be based on CSI-IM or NZP CSI-RS).

In a case that three resource settings are configured, the first resource setting is used for channel measurement, the second resource setting is used for CSI-IM based interference measurement, and the third resource setting is used for NZP CSI-RS based interference measurement.

(2) For periodic or semi-persistent CSI, each CSI-ReportConfig can be configured with one or more periodic or semi-persistent resource settings.

In a case that one resource setting is configured, this resource setting is used for L1-RSRP channel measurement or L1-SINR channel and interference measurement.

In a case that two resource settings are configured, the first resource setting is used for channel measurement, and the second resource setting is used for CSI-IM based interference measurement (or NZP CSI-RS based interference measurement in the case of L 1-SINR measurement).

(3) For CSI measurements other than L1-SINR measurement, the terminal assumes that each NZP CSI-RS port used for interference measurement corresponds to one interference transmission layer.

The following describes in detail the CSI feedback method provided in the embodiments of this application by using some embodiments and application scenarios thereof with reference to the accompanying drawings.

Refer to FIG. 2. FIG. 2 is a first flowchart of a CSI feedback method according to an embodiment of this application. The CSI feedback method shown in FIG. 2 is executed by a terminal. As shown in FIG. 2, the CSI feedback method may include the following steps.

Step 201. A terminal obtains N CSI report configurations, where the N CSI report configurations are used for determining M pieces of first information.

In this embodiment of this application, the terminal obtaining N CSI report configurations may include but is not limited to the following implementations:
Implementation 1. The terminal receives N CSI report configurations.

In this implementation, the N CSI report configurations may be configured by a network-side device to the terminal.

Implementation 2. The terminal receives indication information, where the indication information is used for indicating indexes of N CSI report configurations out of the pre-configured R CSI report configurations, R being an integer greater than or equal to N.

In implementation 2, the R CSI report configurations may be agreed upon by a protocol or configured by a network-side device. When pre-configuring the R CSI report configurations, the network-side device may use the indication information to indicate that N of the R CSI report configurations are used for determining M pieces of first information.

Optionally, the N CSI report configurations are indicated by higher layer signaling or MAC CE. In implementation 1, the network-side device may configure the N CSI report configurations through higher layer signaling (such as RRC signaling) or MAC CE. In implementation 2, the indication information is higher layer signaling or MAC CE, meaning that the network-side device indicates indexes of the N CSI report configurations through higher layer signaling or MAC CE.

In this embodiment of this application, it may be considered that there is a correspondence between a CSI report configuration and first information determined by the CSI report configuration. For example, if CSI report configuration 1 is used for determining first information 1, it may be considered that CSI report configuration 1 corresponds to first information 1. Since the N CSI report configurations are used for determining M pieces of first information, it may be considered that the N CSI report configurations correspond to M pieces of first information, where N is a positive integer, and M is an integer greater than 1. Optionally, the value of N may include the following cases.

Case 1: N is equal to 1.

In this case, one CSI report configuration corresponds to M pieces of first information, that is, one CSI report configuration is used for determining M pieces of first information.

Case 2: N is equal to M.

In this case, M CSI report configurations correspond to M pieces of first information. Optionally, the M CSI report configurations may be in one-to-one correspondence with the M pieces of first information, that is, different CSI report configurations in the M CSI report configurations are used for determining different first information among the M pieces of first information.

Case 3: N is less than M.

In this case, at least one first target CSI report configuration in the M CSI report configurations corresponds to multiple (at least two) pieces of first information, and the first target CSI report configuration is used for determining at least two pieces of first information, that is, at least two of the M pieces of first information are determined by a same CSI report configuration.

In this embodiment of this application, the M pieces of first information determined by the N CSI report configurations may correspond to Q first objects, that is, the M pieces of first information may be used for calculating target parameters of the Q first objects, where Q is a positive integer, and the first object may be any one of the following: TRP; CORESETPoolIndex; and panel.

Optionally, Q may be less than or equal to M, but is not limited thereto. For example, in a case that Q is equal to M, the terminal may calculate, based on each of the M pieces of first information, a target parameter of a first object corresponding to this first information, so as to obtain the target parameters of the M first objects.

In this embodiment of this application, optionally, the first information may be any one of the following: first reference signal resource, and first parameter corresponding to the first reference signal resource.

In a case that the first information is the first reference signal resource, a correspondence between the M first reference signal resources and the Q first objects can be predetermined, such as agreed upon by a protocol (or set by default) or configured by the network-side device, which can be specifically determined according to the actual situation, and is not limited in the embodiments of this application.

In practical application, the first reference signal resource may include any one of the following: reference signal resource for channel measurement (Channel Measurement Resource (or Resource for Channel Measurement), CMR); and reference signal resource for interference measurement (Interference Measurement Resource (or Resource for Interference Measurement), IMR). It should be noted that in a case that the first reference signal resource includes CMR and IMR, the quantities of the CMRs and IMRs included in the first reference signal resource may be equal or unequal, which may be specifically determined according to the actual situation, and is not limited in the embodiments of this application.

In a case that the first object is the first parameter, since the first parameter corresponds to the first reference signal resource, the correspondence between the M first reference signal resources and the Q first objects can be predetermined, so that the correspondence between the M first parameters and the Q first objects can be determined.

Optionally, the first parameter may include but is not limited to at least one of the following: CMR group; CMR set; TRP identification information; and QCL assumption.

It should be noted that the first parameter may not include CMR group and CMR set at the same time. In a case that the first parameter is CMR set, one or more CMR groups included in a same CMR set all correspond to a same first reference signal resource. In a case that the first parameter is CMR group, each different CMR group included in a same CMR set corresponds to a different first reference signal resource.

Step 202: The terminal sends a first CSI report, where the first CSI report is calculated based on the M pieces of first information.

During specific implementation, after obtaining the N CSI report configurations, the terminal may determine M pieces of first information based on the N CSI report configurations; calculate target parameters of Q TRPs based on the correspondence between the M pieces of first information and the Q first objects; and generate a first CSI report, where the first CSI report includes the target parameters of the Q TRPs.

The target parameter of each TRP is determined based on a channel measurement result for that TRP and an interference measurement result for that TRP. The channel measurement result is obtained through CMR measurement, and the interference measurement result is obtained through IMR measurement. The target parameter may include at least one of the following: CQI, PMI, RI, and the like.

In a case that the first information is the first reference signal resource, the terminal may directly measure the M first reference signal resources to obtain the target parameters of the Q TRPs.

In a case that the first information is the first parameter, the terminal may first determine M first reference signal resources corresponding to M first parameters, and then obtain the target parameters of the Q TRPs based on the M first reference signal resources determined through measurement.

According to the CSI feedback method provided in this embodiment of this application, the terminal may determine M first reference signal resources or M first parameters based on the one or more CSI report configurations sent by the network-side device, where the first parameters correspond to the first reference signal resources; and then the terminal may calculate a CSI report, that is, an MTRP CSI report, based on the M first reference signal resources or the M first parameters. In this way, the calculation of the MTRP CSI report is realized. Additionally, resource overheads for configuring CSI report configurations can also be reduced in a case that the MTRP CSI report is calculated based on M pieces of first information configured in one CSI report configuration.

The following describes the N CSI report configurations in the embodiments of this application.

In an embodiment of this application, optionally, the N CSI report configurations are configured with P first fields, and the first CSI report is calculated based on the M pieces of first information and the P first fields, where P is a positive integer.

In this optional implementation, in some embodiments, P may be greater than or equal to N. In a case that P is equal to N, each CSI report configuration of the N CSI configuration reports is configured with a first field; in a case that P is greater than N, at least one second CSI report configuration in the N CSI report configurations is configured with at least two first fields.

Certainly, in some other embodiments, P may be less than N. In this case, among the N CSI report configurations, some may be configured with no first field, and some may be configured with one or more first fields, which may be determined according to the actual situation, and is not limited in the embodiments of this application.

In this way, as compared to the quantity of each field in one CSI report configuration being 1 in the prior art, the CSI report configuration in this optional implementation can be configured with zero, one or more first fields, thereby improving the configuration flexibility of the CSI report configuration.

In addition, in this optional implementation, the P first fields may be used for determining valid information, in the M pieces of first information, for calculating the first CSI report. In this way, after determining the M pieces of first information, the terminal may determine the valid information in the M pieces of first information based on the P first fields, and calculate the first CSI report based only on the valid information in the M pieces of first information, thereby reducing the overheads for calculating the first CSI report by the terminal.

During specific implementation, the P first fields may indicate restriction information of the Q first objects, so as to determine the valid information in the M pieces of first information, where the restriction information of the first object may include at least one of the following: RI restriction information of the first object; port restriction information of the first object; and codebook restriction information of the first object.

It should be noted that the restriction information indicated by different first fields may be the same or different; and the restriction information of different first objects indicated by a same first field may be the same or different, which may be specifically determined according to the actual situation, and is not limited in the embodiments of this application.

Therefore, in the embodiments of this application, different first objects can have different restriction information, and the restriction information of Q first objects can be indicated using one or more first fields, thereby implementing flexible indication of the restriction information.

Optionally, the first field may include but is not limited to at least one of the following: codebook configuration field; non-precoding matrix port indication field; report configuration type field; report quantity field; channel quality indicator CQI table field; and subband size field.

In this embodiment of this application, optionally, the CSI report configuration may include only the first field. This can reduce the quantity of information bits of the CSI report configuration, thereby reducing the configuration overheads of the CSI report configuration. Certainly, it can be understood that the CSI report configuration may include the 15 fields described above, which may be specifically determined according to the actual situation, and is not limited in the embodiments of this application.

In the embodiments of this application, the N CSI report configurations are used for determining M pieces of first information. Optionally, the N CSI report configurations may be used for determining the M pieces of first information based on a correspondence between a target field and the first information, where the target field may be the above-mentioned first field or a second field, and the second field may be in the same or different representation form as the first field. In the following descriptions, the target field being the first field is used for illustration, but the representation form of the target field is not limited thereto.

During actual application, a correspondence between the target field and the first information may be agreed upon by a protocol or configured by a network-side device, which can be specifically determined according to the actual situation, and is not limited in the embodiments of this application.

During specific implementation, the manner in which the N CSI report configurations are used for determining the M pieces of first information varies with the value of N. Details are as follows:

### 1. N is equal to 1.

In this case, optionally, in a case that N is equal to 1, the CSI report configuration may satisfy any one of the following:
(1) the CSI report configuration is configured with M first fields, where the M first fields correspond to the M pieces of first information; and
(2) the CSI report configuration is configured with one first field, where the first field corresponds to restriction information, and the restriction information corresponds to the M pieces of first information.

In this optional implementation, the M pieces of first information are determined through one CSI report configuration. In (1) and (2), the M pieces of first information are determined through one CSI report configuration in different ways. Details are as follows:

In a case that the CSI report configuration satisfies (1), M pieces of first information is determined by configuring M first fields in one CSI report configuration. This can reduce the quantity of CSI report configurations configured, thereby reducing the signaling overheads for CSI feedback.

Optionally, the M first fields may be in one-to-one correspondence with the M pieces of first information, which is not limited thereto.

In a case that the CSI report configuration satisfies (2), M pieces of first information is determined by configuring one first field in one CSI report configuration. In this way, on the basis of (1), the quantity of first fields configured in the CSI report configuration can be further reduced, and thus the quantity of information bits configured in the CSI report configuration can be reduced, further reducing the signaling overheads for CSI feedback.

In (2), one first field may correspond to M pieces of first information through corresponding restriction information. Optionally, the restriction information corresponding to the first field may include restriction information of the above-mentioned Q first objects, where the restriction information of each first object may include at least one of the following: RI restriction information of the first object; port restriction information of the first object; and codebook restriction information of the first object.

### 2. N is equal to M.

In this case, optionally, the M first fields configured in M CSI report configurations correspond to the M pieces of first information, where each CSI report configuration is configured with one of the M first fields.

In this optional implementation, the M pieces of first information are determined through the M CSI report configurations. That the M CSI report configurations are configured with M first fields may be understood as that each CSI report configuration is configured with one first field. In other words, each of the M pieces of first information is determined by one of the M CSI report configurations. The correspondence between the M first fields and the M pieces of first information may be a one-to-one correspondence, which is not limited to thereto.

Optionally, that M first fields configured in M CSI report configurations correspond to the M pieces of first information satisfies any one of the following:
(a) the M pieces of first information are configured in a first CSI report configuration, and the M first fields configured in the M CSI report configurations correspond to the M pieces of first information, the first CSI report configuration being one of the M CSI report configurations; and
(b) the M pieces of first information are configured in the M CSI report configurations, and a first field configured in a second CSI report configuration corresponds to the first information configured in the second CSI report configuration, the second CSI report configuration being any one of the M CSI report configurations.

In (a) and (b), each CSI report configuration is configured with one first field, and each first field configured in each CSI report configuration corresponds to one piece of first information.

The main difference between (a) and (b) lies in the configuration ways of the M pieces of first information. Specifically, in (a), the M pieces of first information are configured by one of the M CSI report configurations, that is, configured by a first CSI report configuration, and each first field configured in each CSI report configuration corresponds to a different piece of first information in the M pieces of first information; in (b), the M pieces of first information are configured by all of the M CSI report configurations, each CSI report configuration is configured with one piece of first information, and the first field configured in each CSI report configuration correspond to the first information configured in that CSI report configuration.

During specific implementation, the first CSI report configuration may be the first, the last or a specified CSI report configuration among the M CSI report configurations, which may be determined according to the actual situation, and is not limited in the embodiments of this application.

In a case that the first information is the first reference signal resource, the first information may be configured by at least one of the following in the CSI report configuration: resourcesForChannelMeasurement field, csi-IM-ResourcesForInterference field, and nzp-CSI-RS-ResourcesForInterference field.

In a case that the first information is the first parameter, the first information may be configured by an existing field in the CSI report configuration or by a new field in the CSI report configuration (the new field may be dedicated to setting the first parameter), which may be specifically determined according to the actual situation, and is not limited in the embodiments of this application.

In the embodiments of this application, optionally, at least one of the N CSI report configurations is configured with unequal quantities of interference measurement resources IMRs and channel measurement resources CMRs.

In practice application, one IMR may correspond to one or more CMRs, and one CMR may also correspond to one or more IMRs, which may be specifically determined according to the actual situation, and is not limited in the embodiments of this application.

This can improve the configuration flexibility of the CSI report configuration compared to the prior art that strictly requires the quantities of IMRs and CMRs to be equal within a same CSI report configuration.

Optionally, after the terminal obtains N CSI report configurations and before the terminal sends a CSI report, the method further includes:
obtaining, by the terminal based on a quasi co-location QCL assumption of all CMRs corresponding to a first IMR, a first interference measurement result for the first IMR; where
the first IMR is any one of the IMRs configured in the N CSI report configurations; and the first CSI report is calculated based on the first interference measurement result.

In this optional implementation, when measuring a specific IMR, the terminal may perform measurement based on the QCL assumptions of all CMRs corresponding to that IMR, meaning that an interference measurement result of a specific IMR may be obtained based on the QCL assumptions of all CMRs corresponding to that IMR.

It should be noted that in a case that the quantity of CMRs corresponding to a specific IMR is greater than 1, the terminal may perform measurement based on the QCL assumptions of some or all of the CMRs corresponding to that IMR, which may be specifically determined according to the actual situation, and is not limited in the embodiments of this application.

Optionally, in a case that N is greater than 1 and the first IMR corresponds to at least two CMRs, the at least two CMRs are configured by at least one CSI report configuration among the N CSI report configurations.

In this optional implementation, CMRs corresponding to a same IMR may be configured by one or more CSI report configurations.

For example, it is assumed that the N CSI report configurations include CSI report configuration 1 and CSI report configuration 2, with CMR1, CMR2, CMR3, and IMR1 configured in CSI report configuration 1, and CMR4, CMR5, and IMR2 configured in CSI report configuration.

In one implementation, IMR1 may correspond to CMR1, CMR2, CMR3, and CMR4, where the CMRs corresponding to IMR1 come from CSI report configuration 1 and CSI report configuration 2; and IMR2 may correspond to CMR5, where the CMR corresponding to IMR2 comes from CSI report configuration 2.

In another implementation, IMR1 may correspond to CMR1, CMR2, and CMR3, where the CMRs corresponding to IMR1 come from CSI report configuration 1; and IMR2 may correspond to CMR4 and CMR5, where the CMRs corresponding to IMR2 comes from CSI report configuration 2.

Optionally, a correspondence between the IMRs and CMRs configured in the N CSI report configurations may be indicated by any one of the following: higher layer signaling; and media access control MAC control element CE.

During specific implementation, in a case that the correspondence between the IMRs and CMRs configured in the N CSI report configurations is indicated by a MAC CE, optionally, the MAC CE may indicate the correspondence between the IMRs and CMRs through a bit map.

For ease of understanding, the following provides description with reference to Table 1.

**Table 1: Bit map indicating a correspondence between IMRs and CMRs**

| | IMR1 | IMR2 | IMR3 |
|---|---|---|---|
| CMR1 | 1 | 0 | 1 |
| CMR2 | 0 | 1 | 1 |

In Table 1, it is assumed that a bit value of 0 indicates absence of a correspondence, and a bit value of 1 indicates presence of a correspondence. Then in Table 1, IMR1 corresponds to CMR1; IMR2 corresponds to CMR2; and IMR3 corresponds to CMR1 and CMR2.

In a case that the correspondence between IMRs and CMRs is indicated by a MAC CE, the correspondence between IMRs and CMRs can be modified by changing the bit values, thereby improving the flexibility of indicating the correspondence between IMRs and CMRs.

In a case that a correspondence between the IMRs and CMRs configured in the N CSI report configurations is indicated by higher layer signaling, optionally, the higher layer signaling may indicate a quantity T of IMRs, each of which corresponds to multiple CMRs, where T is a positive integer. Then, it can be determined that in one IMR resource set, the first T or last T IMR resources correspond to multiple CMRs, and the remaining IMRs correspond to one CMR. In this case, the IMRs corresponding to one CMR are in one-to-one correspondence with the CMRs for STRP measurement hypothesis, and the IMRs corresponding to multiple CMRs are in one-to-one correspondence with the CMRs for NCJT measurement hypothesis.

Certainly, it can be understood that in other implementations, the correspondence between the IMRs and CMRs configured in the N CSI report configurations can alternatively be predetermined by a protocol, which is not limited in the embodiments of this application.

Optionally, in a case that a quantity of IMRs configured in a second CSI report configuration is 1, any one of the following is satisfied:
(i) the IMR configured in the second CSI report configuration corresponds to all CMRs configured in the second CSI report configuration; and
(ii) in a case that N is greater than 1, the IMR configured in the second CSI report configuration corresponds to all CMRs configured in the N CSI report configurations; where
the second CSI report configuration is any one of the N CSI report configurations.

For ease of understanding, descriptions are provided by using examples.

It is assumed that the N CSI report configurations include CSI report configuration 1 and CSI report configuration 2, with CMR1, CMR2, CMR3, and IMR1 configured in CSI report configuration 1, and CMR4 and CMR5 configured in CSI report configuration. For (i), IMR1 may correspond to CMR1, CMR2 and CMR3; and for (ii), IMR1 may correspond to CMR1, CMR2, CMR3, CMR4, and CMR5.

This can improve the manner of determining the CMR corresponding to the IMR, thereby improving the flexibility of determining the correspondence between IMRs and CMRs.

In the embodiments of this application, optionally, IMRs configured in the N CSI report configurations are configured with QCL assumptions.

During specific implementation, each IMR may be configured with one or more QCL assumptions, and the quantity of QCL assumptions configured by the IMR may be predetermined by a protocol or configured by a network-side device, which may be specifically determined according to the actual situation, and is not limited in the embodiments of this application. This can improve the configuration flexibility of IMRs compared to the prior art that only CMRs are configured with QCL assumptions.

Optionally, after the terminal obtains N CSI report configurations and before the terminal sends a CSI report, the method further includes:
obtaining, by the terminal, a second interference measurement result for a second IMR based on R QCL assumptions configured for the second IMR; where
the second IMR is any one of the IMRs configured in the N CSI report configurations; the first CSI report is calculated based on the second interference measurement result; and R is a positive integer.

In this optional implementation, the terminal may perform IMR measurement directly based on the QCL assumptions of the IMR, without first determining the CMR corresponding to the IMR and then performing IMR measurement based on the QCL assumptions of the CMR corresponding to the IMR. This can improve the speed of IMR measurement.

Optionally, after the terminal obtains N CSI report configurations and before the terminal sends a CSI report, the method further includes:
obtaining, by the terminal based on QCL assumptions corresponding to R first CMRs, a first channel measurement result for the R first CMRs; where
the R first CMRs are CMRs that are configured in the N CSI report configurations and that have the same QCL assumption as the second IMR; and the first CSI report is further calculated based on the first channel measurement result.

During specific implementation, in a case that R is equal to 1, the terminal may calculate the CSI report based on the IMR and CMR with the same QCL assumption.

In a case that R is greater than 1, each QCL assumption corresponds to one CMR with the same QCL assumption, and the terminal may calculate the CSI report based on the IMR with the same QCL assumption and all CMRs.

In this way, the CSI report is calculated based on the IMR and CMR with the same QCL assumption, thereby improving the reliability of CSI report calculation.

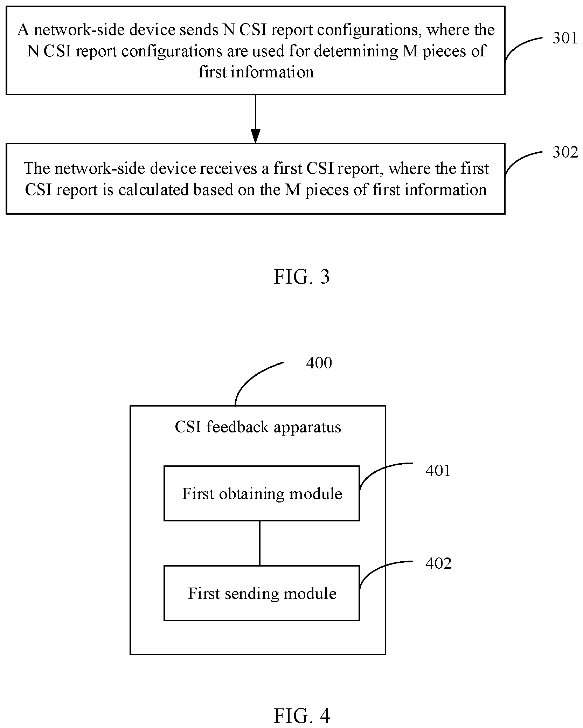

Refer to FIG. 3. FIG. 3 is a second flowchart of a CSI feedback method according to an embodiment of this application. The CSI feedback method shown in FIG. 3 may be executed by a network-side device. As shown in FIG. 3, the CSI feedback method may include the following steps.

Step 301. The network-side device sends N CSI report configurations, where the N CSI report configurations are used for determining M pieces of first information.

Step 302. The network-side device receives a first CSI report, where the first CSI report is calculated based on the M pieces of first information.

The first information is any one of the following: first reference signal resource, and first parameter corresponding to the first reference signal resource; N is a positive integer; and M is an integer greater than 1.

Optionally, the N CSI report configurations are configured with P first fields, and the first CSI report is calculated based on the M pieces of first information and the P first fields, where P is a positive integer.

Optionally, in a case that N is equal to 1, the CSI report configuration satisfies any one of the following:
the CSI report configuration is configured with M first fields, where the M first fields correspond to the M pieces of first information; and
the CSI report configuration is configured with one first field, where the first field corresponds to restriction information, and the restriction information corresponds to the M pieces of first information.

Optionally, in a case that N is equal to M, M first fields configured in M CSI report configurations correspond to the M pieces of first information; where
each CSI report configuration is configured with one of the M first fields.

Optionally, that M first fields configured in M CSI report configurations correspond to the M pieces of first information satisfies any one of the following:
the M pieces of first information are configured in a first CSI report configuration, and the M first fields configured in the M CSI report configurations correspond to the M pieces of first information, the first CSI report configuration being one of the M CSI report configurations; and
the M pieces of first information are configured in the M CSI report configurations, and a first field configured in a second CSI report configuration corresponds to the first information configured in the second CSI report configuration, the second CSI report configuration being any one of the M CSI report configurations.

Optionally, at least one of the N CSI report configurations is configured with unequal quantities of interference measurement resources IMRs and channel measurement resources CMRs.

Optionally, after the terminal obtains N CSI report configurations and before the terminal sends a CSI report, the method further includes:
obtaining, by the terminal based on a quasi co-location QCL assumption of all CMRs corresponding to a first IMR, a first interference measurement result for the first IMR; where
the first IMR is any one of the IMRs configured in the N CSI report configurations; and the first CSI report is calculated based on the first interference measurement result.

Optionally, in a case that N is greater than 1 and the first IMR corresponds to at least two CMRs, the at least two CMRs are configured by at least one CSI report configuration among the N CSI report configurations.

Optionally, a correspondence between the IMRs and CMRs configured in the N CSI report configurations is indicated by any one of the following: higher layer signaling; and media access control MAC control element CE.

Optionally, in a case that a quantity of IMRs configured in a second CSI report configuration is 1, any one of the following is satisfied:
the IMR configured in the second CSI report configuration corresponds to all CMRs configured in the second CSI report configuration; and
in a case that N is greater than 1, the IMR configured in the second CSI report configuration corresponds to all CMRs configured in the N CSI report configurations; where
the second CSI report configuration is any one of the N CSI report configurations.

Optionally, IMRs configured in the N CSI report configurations are configured with QCL assumptions.

Optionally, the first parameter includes at least one of the following: CMR group; CMR set; TRP identification information; and QCL assumption.

Optionally, the first field includes at least one of the following: codebook configuration field; non-precoding matrix port indication field; report configuration type field; report quantity field; channel quality indicator CQI table field; and subband size field.

Optionally, the N CSI report configurations are indicated by higher layer signaling or MAC CE.

It should be noted that this embodiment serves as an embodiment of the network-side device corresponding to the method embodiment in FIG. 2. Therefore, reference can be made to the related description of the method embodiment in FIG. 2, and the same beneficial effect can be achieved. To avoid repetition, details are not described again herein.

It should be noted that various optional implementations described in the embodiments of this application may be implemented in combination or may be implemented separately, which is not limited in the embodiments of this application.

For ease of understanding, descriptions are provided by using examples.
(1) The terminal may calculate an MTRP CSI report based on one or more CSI reporting settings.
(2) If the terminal calculates an MTRP CSI report based on one CSI reporting setting, the codebookConfig field and/or non-PMI-PortIndication field in the CSI-ReportConfig needs to support multiple TRPs. The possible manners are as follows:
   (a) The codebookConfig fields corresponding to multiple TRPs are configured in the CSI-ReportConfig, and each codebookConfig field and/or non-PMI-PortIndication field corresponds to one CMR group or TRP ID or one set of QCL assumptions. When the UE calculates CSI, a mapping relationship between CMRs and the codebookConfig fields and/or non-PMI-PortIndication fields is established.
   (b) In the codebookConfig field and/or non-PMI-PortIndication field, restriction information (including RI restriction and port-related information) of multiple TRPs is configured, and the restriction information of each TRP corresponds to one CMR group or TRP ID or a set of QCL assumptions. When the UE calculates CSI, a mapping relationship between CMRs and information of each TRP is established. Alternatively, each piece of restriction information corresponds to M CMR groups.
(3) If the terminal calculates an MTRP CSI report based on multiple CSI reporting settings, the codebookConfig fields and/or non-PMI-PortIndication fields in the CSI-ReportConfig correspond to one TRP. When the UE calculates CSI, a mapping relationship between CMRs and the codebookConfig fields and/or non-PMI-PortIndication fields is established. The possible manners are as follows:
   (a) CSI-RS resources corresponding to multiple TRPs are configured in one of the CSI-ReportConfig, and each codebookConfig field and/or non-PMI-PortIndication field in multiple CSI Reporting settings corresponds to one CMR group or TRP ID or one set of QCL assumptions. When the UE calculates CSI, a mapping relationship between CMRs and the codebookConfig fields and/or non-PMI-PortIndication fields is established.
   (b) The CSI-RS resource corresponding to one TRP is configured in each CSI-ReportConfig, and the codebookConfig field and/or non-PMI-PortIndication field in this CSI-ReportConfig corresponds to the CSI-RS resource configured in this CSI-ReportConfig.
(4) If the terminal calculates an MTRP CSI report based on one CSI reporting setting, an IMR configured in the CSI reporting setting may correspond to one or more CMRs.
   (a) If the IMR corresponds to multiple CMRs, when measuring the IMR, the terminal needs to use the QCL assumptions of the corresponding multiple CMRs to perform interference measurement.
   (b) An IMR may correspond to one or more CMRs and may be indicated by higher layer signaling or MAC CE.
      Example 1: The MAC CE can indicate the correspondence between IMRs and CMRs through one bit map.
      Example 2: The higher layer signaling indicates a quantity N of IMRs, each of which corresponds to multiple CMRs. Then, in one IMR resource set, the first N or last N IMR resources correspond to multiple CMRs, and the remaining IMRs correspond to one CMR. In this case, the IMRs corresponding to one CMR are in one-to-one correspondence with the CMRs for STRP measurement hypothesis, and the IMRs corresponding to multiple CMRs are in one-to-one correspondence with the CMRs for NCJT measurement hypothesis.
   (c) In a case that only one IMR is configured, this IMR corresponds to all CMRs configured in the CSI reporting setting, and the terminal needs to use the QCL assumptions of the corresponding multiple CMRs to perform interference measurement.
(5) If the terminal calculates an MTRP CSI report based on multiple CSI reporting settings, a specified IMR configured in each CSI reporting setting may correspond to one or more CMRs.
   (a) If the IMR corresponds to multiple CMRs, when measuring the IMR, the terminal needs to use the QCL assumptions of the corresponding multiple CMRs to perform interference measurement.
   (b) An IMR may correspond to one or more CMRs and may be indicated by higher layer signaling or MAC CE.
      Example 1: The MAC CE indicates the correspondence between IMRs and CMRs through one bit map.
      Example 2: The higher layer signaling indicates a quantity N of IMRs, each of which corresponds to multiple CMRs. Then, in one IMR resource set, the first N or last N IMR resources correspond to multiple CMRs, and the remaining IMRs correspond to one CMR. In this case, the IMRs corresponding to one CMR are in one-to-one correspondence with the CMRs for STRP measurement hypothesis, and the IMRs corresponding to multiple CMRs are in one-to-one correspondence with the CMRs for NCJT measurement hypothesis.
      Note: The CMRs in (a) and (b) can come from one reporting setting or multiple reporting settings.
   (c) In a case that only one IMR is configured in one CSI reporting setting, this IMR corresponds to all CMRs configured in the CSI reporting setting, and the terminal needs to use the QCL assumptions of the corresponding multiple CMRs to perform interference measurement.
   (d) In a case that only one IMR is configured in all CSI reporting settings, this IMR corresponds to all CMRs configured in all the CSI reporting settings, and the terminal needs to use the QCL assumptions of the corresponding multiple CMRs to perform interference measurement.
(6) If the terminal calculates an MTRP CSI report based on one CSI reporting setting, the IMR configured in the CSI reporting setting is configured with QCL assumptions, and the UE measures the IMR based on the corresponding QCL assumptions.
   (a) If the IMR is configured with one QCL assumption, CSI is calculated based on the IMR and CMR with the same QCL assumption.
   (b) If the IMR is configured with multiple QCL assumptions, each QCL assumption corresponds to one CMR with the same QCL assumption, and CSI is calculated based on this IMR and all CMRs.
(7) If the terminal calculates an MTRP CSI report based on multiple CSI reporting settings, in a case that the CSI-RS resources corresponding to multiple TRPs are all configured in one CSI reporting setting, the remaining CSI reporting settings can be configured with only some fields, such as the codebookConfig; reportConfigType field, the reportQuantity field, the reportFreqConfiguration field, the cqi-Tabl field, the subbandSize field, and the non-PMI-PortIndication field.

In the embodiment of the application, in the case of calculating an MTRP CSI report based on one CSI reporting setting, different TRPs can have different codebook restrictions, rank restrictions, and port restrictions; multiple CSI reporting settings can be used to configure codebook restrictions, rank restrictions, and port restrictions of different TRPs; and the quantity of IMRs can be different from that of CMRs. Therefore, in this embodiment of this application, the CSI reporting setting supports configuration of multiple TRPs with different restrictions; the CSI reporting setting supports unequal quantities of IMRs and CMRs, so that signaling overheads can be reduced and MTRP CSI measurement can be performed; and the mapping relationship between IMRs and CMRs can be further modified through higher layer signaling.

It should be noted that the CSI feedback method provided in this embodiment of this application may be performed by a CSI feedback apparatus or a control module for performing the CSI feedback method in the CSI feedback apparatus. This embodiment of this application uses the CSI feedback apparatus performing the CSI feedback method as an example to describe the CSI feedback apparatus provided in the embodiments of this application.

Refer to FIG. 4. FIG. 4 is a structural diagram of a CSI feedback apparatus according to an embodiment of this application.

As shown in FIG. 4, the CSI feedback apparatus 400 includes:
a first obtaining module 401 configured to obtain N CSI report configurations, where the N CSI report configurations are used for determining M pieces of first information; and
a first sending module 402 configured to send a first CSI report, where the first CSI report is calculated based on the M pieces of first information; where
the first information is any one of the following: first reference signal resource, and first parameter corresponding to the first reference signal resource; N is a positive integer; and M is an integer greater than 1.

Optionally, the N CSI report configurations are configured with P first fields, and the first CSI report is calculated based on the M pieces of first information and the P first fields, where P is a positive integer.

Optionally, in a case that N is equal to 1, the CSI report configuration satisfies any one of the following:
the CSI report configuration is configured with M first fields, where the M first fields correspond to the M pieces of first information; and
the CSI report configuration is configured with one first field, where the first field corresponds to restriction information, and the restriction information corresponds to the M pieces of first information.

Optionally, in a case that N is equal to M, M first fields configured in M CSI report configurations correspond to the M pieces of first information; where
each CSI report configuration is configured with one of the M first fields.

Optionally, that M first fields configured in M CSI report configurations correspond to the M pieces of first information satisfies any one of the following:
the M pieces of first information are configured in a first CSI report configuration, and the M first fields configured in the M CSI report configurations correspond to the M pieces of first information, the first CSI report configuration being one of the M CSI report configurations; and
the M pieces of first information are configured in the M CSI report configurations, and a first field configured in a second CSI report configuration corresponds to the first information configured in the second CSI report configuration, the second CSI report configuration being any one of the M CSI report configurations.

Optionally, at least one of the N CSI report configurations is configured with unequal quantities of interference measurement resources IMRs and channel measurement resources CMRs.

Optionally, the CSI feedback apparatus further includes:
a second obtaining module configured to obtain, based on a quasi co-location QCL assumption of all CMRs corresponding to a first IMR, a first interference measurement result for the first IMR; where
the first IMR is any one of the IMRs configured in the N CSI report configurations; and the first CSI report is calculated based on the first interference measurement result.

Optionally, in a case that N is greater than 1 and the first IMR corresponds to at least two CMRs, the at least two CMRs are configured by at least one CSI report configuration among the N CSI report configurations.

Optionally, a correspondence between the IMRs and CMRs configured in the N CSI report configurations is indicated by any one of the following: higher layer signaling; and media access control MAC control element CE.

Optionally, in a case that a quantity of IMRs configured in a second CSI report configuration is 1, any one of the following is satisfied:
the IMR configured in the second CSI report configuration corresponds to all CMRs configured in the second CSI report configuration; and
in a case that N is greater than 1, the IMR configured in the second CSI report configuration corresponds to all CMRs configured in the N CSI report configurations; where
the second CSI report configuration is any one of the N CSI report configurations.

Optionally, IMRs configured in the N CSI report configurations are configured with QCL assumptions.

Optionally, the CSI feedback apparatus 400 further includes:
a second obtaining module configured to obtain a second interference measurement result for a second IMR based on R QCL assumptions configured for the second IMR; where
the second IMR is any one of the IMRs configured in the N CSI report configurations; the first CSI report is calculated based on the second interference measurement result; and R is a positive integer.

Optionally, the CSI feedback apparatus 400 further includes:
a third obtaining module configured to obtain, based on QCL assumptions corresponding to R first CMRs, a first channel measurement result for the R first CMRs; where
the R first CMRs are CMRs that are configured in the N CSI report configurations and that have the same QCL assumption as the second IMR; and the first CSI report is further calculated based on the first channel measurement result.

Optionally, the first parameter includes at least one of the following: CMR group; CMR set; TRP identification information; and QCL assumption.

Optionally, the first field includes at least one of the following: codebook configuration field; non-precoding matrix port indication field; report configuration type field; report quantity field; channel quality indicator CQI table field; and subband size field.

Optionally, the N CSI report configurations are indicated by higher layer signaling or MAC CE.

The CSI feedback apparatus 400 may be an apparatus, or may be a component, an integrated circuit, or a chip in a terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (Personal Computer, PC), a television (Television, TV), a teller machine, a self-service machine or the like, which are not specifically limited in the embodiments of this application.

The CSI feedback apparatus 400 provided in this embodiment of this application can implement the processes implemented by the method embodiment in FIG. 2, with the same technical effects achieved. To avoid repetition, details are not described herein again.

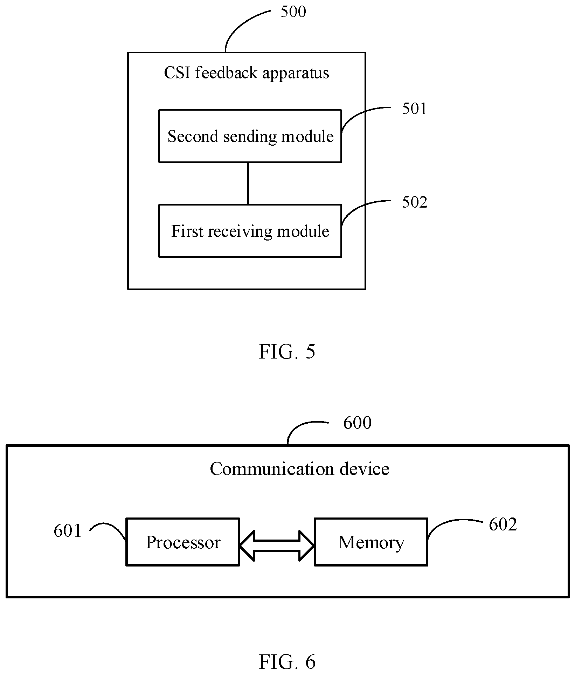

Refer to FIG. 5. FIG. 5 is a structural diagram of a CSI feedback apparatus according to an embodiment of this application.

As shown in FIG. 5, the CSI feedback apparatus 500 includes:
a second sending module 501 configured to send N CSI report configurations, where the N CSI report configurations are used for determining M pieces of first information; and
a first receiving module 502 configured to receive a first CSI report, where the first CSI report is calculated based on the M pieces of first information; where
the first information is any one of the following: first reference signal resource, and first parameter corresponding to the first reference signal resource; N is a positive integer; and M is an integer greater than 1.

Optionally, the N CSI report configurations are configured with P first fields, and the first CSI report is calculated based on the M pieces of first information and the P first fields, where P is a positive integer.

Optionally, in a case that N is equal to 1, the CSI report configuration satisfies any one of the following:
the CSI report configuration is configured with M first fields, where the M first fields correspond to the M pieces of first information; and
the CSI report configuration is configured with one first field, where the first field corresponds to restriction information, and the restriction information corresponds to the M pieces of first information.

Optionally, in a case that N is equal to M, M first fields configured in M CSI report configurations correspond to the M pieces of first information; where
each CSI report configuration is configured with one of the M first fields.

Optionally, that M first fields configured in M CSI report configurations correspond to the M pieces of first information satisfies any one of the following:
the M pieces of first information are configured in a first CSI report configuration, and the M first fields configured in the M CSI report configurations correspond to the M pieces of first information, the first CSI report configuration being one of the M CSI report configurations; and
the M pieces of first information are configured in the M CSI report configurations, and a first field configured in a second CSI report configuration corresponds to the first information configured in the second CSI report configuration, the second CSI report configuration being any one of the M CSI report configurations.

Optionally, at least one of the N CSI report configurations is configured with unequal quantities of interference measurement resources IMRs and channel measurement resources CMRs.

Optionally, after the terminal obtains N CSI report configurations and before the terminal sends a CSI report, the CSI feedback apparatus further includes:
obtaining, by the terminal based on a quasi co-location QCL assumption of all CMRs corresponding to a first IMR, a first interference measurement result for the first IMR; where
the first IMR is any one of the IMRs configured in the N CSI report configurations; and the first CSI report is calculated based on the first interference measurement result.

Optionally, in a case that N is greater than 1 and the first IMR corresponds to at least two CMRs, the at least two CMRs are configured by at least one CSI report configuration among the N CSI report configurations.

Optionally, a correspondence between the IMRs and CMRs configured in the N CSI report configurations is indicated by any one of the following: higher layer signaling; and media access control MAC control element CE.

Optionally, in a case that a quantity of IMRs configured in a second CSI report configuration is 1, any one of the following is satisfied:
the IMR configured in the second CSI report configuration corresponds to all CMRs configured in the second CSI report configuration; and
in a case that N is greater than 1, the IMR configured in the second CSI report configuration corresponds to all CMRs configured in the N CSI report configurations; where
the second CSI report configuration is any one of the N CSI report configurations.

Optionally, IMRs configured in the N CSI report configurations are configured with QCL assumptions.

Optionally, the first parameter includes at least one of the following: CMR group; CMR set; TRP identification information; and QCL assumption.

Optionally, the first field includes at least one of the following: codebook configuration field; non-precoding matrix port indication field; report configuration type field; report quantity field; channel quality indicator CQI table field; and subband size field.

Optionally, the N CSI report configurations are indicated by higher layer signaling or MAC CE.

The CSI feedback apparatus 500 may be an apparatus, or may be a component, an integrated circuit, or a chip in a network-side device. The network-side device may include but is not limited to the foregoing types of the network-side device 12, which is not specifically limited in the embodiments of this application.

The CSI feedback apparatus 500 provided in this embodiment of this application can implement the processes implemented by the method embodiment in FIG. 3, with the same technical effects achieved. To avoid repetition, details are not described herein again.

Optionally, as shown in FIG. 6, an embodiment of this application further provides a communication device 600 including a processor 601, a memory 602, and a program or instructions stored in the memory 602 and capable of running on the processor 601. For example, in a case that the communication device 600 is a terminal, when the program or instructions are executed by the processor 601, the processes of the method embodiment corresponding to FIG. 2 or FIG. 3 are implemented, with the same technical effects achieved. In a case that the communication device 600 is a network-side device, when the program or instructions are executed by the processor 601, the processes of the foregoing embodiment of the CSI feedback method are implemented, with the same beneficial effects achieved. To avoid repetition, details are not described herein again.

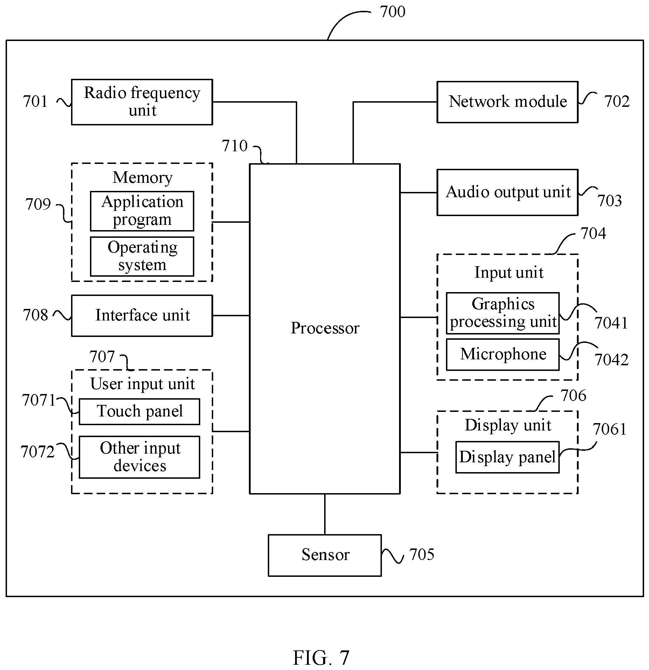

An embodiment of this application further provides a terminal including a processor and a communication interface. The processor is configured to obtain N CSI report configurations, where the N CSI report configurations are used for determining M pieces of first information; the first information is any one of the following: first reference signal resource, and first parameter corresponding to the first reference signal resource; N is a positive integer; and M is an integer greater than 1; and the communication interface is configured to send a first CSI report, where the first CSI report is calculated based on the M pieces of first information. It should be noted that this terminal embodiment corresponds to the foregoing terminal-side method embodiment. All implementation processes and implementations of the foregoing method embodiment are applicable to this terminal embodiment, with the same technical effects achieved. Specifically, FIG. 7 is a schematic diagram of a hardware structure of a terminal for implementing an embodiment of this application.

The terminal 700 includes but is not limited to at least some of a radio frequency unit 701, a network module 702, an audio output unit 703, an input unit 704, a sensor 705, a display unit 706, a user input unit 707, an interface unit 708, a memory 709, and a processor 710.

It can be understood by those skilled in the art that the terminal 700 may further include a power supply (for example, a battery) supplying power to the components. The power supply may be logically connected to the processor 710 via a power management system, so that functions such as charge management, discharge management, and power consumption management are implemented by using the power management system. The structure of the terminal shown in FIG. 7 does not constitute any limitation on the terminal, and the terminal may include more or fewer components than shown in the figure, or combine some of the components, or have different arrangements of the components. Details are not described herein.

It should be understood that in this embodiment of this application, the input unit 704 may include a graphics processing unit (Graphics Processing Unit, GPU) 7041 and a microphone 7042. The graphics processing unit 7041 processes image data of a static picture or a video that is obtained by an image capture apparatus (for example, a camera) in a video capture mode or an image capture mode. The display unit 706 may include a display panel 7061. The display panel 7061 may be configured in a form of a liquid crystal display, an organic light-emitting diode display, or the like. The user input unit 707 includes a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a functional button (such as a volume control button or a power on/off button), a trackball, a mouse, and a joystick. Details are not described herein.

In this embodiment of this application, the radio frequency unit 701 transmits downlink data received from a network-side device to the processor 710 for processing, and in addition, transmits uplink data to the network-side device. Generally, the radio frequency unit 701 includes but is not limited to an antenna, at least one amplifier, a transceiver, a coupler, a low noise amplifier, a duplexer, and the like.

The memory 709 may be configured to store software programs or instructions and various data. The memory 709 may include a program or instruction storage area and a data storage area. The program or instruction storage area may store an operating system, an application program or instruction required by at least one function (for example, a sound play function or an image play function), and the like. In addition, the memory 709 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other volatile solid-state storage device.

The processor 710 may include one or more processing units. Optionally, an application processor and a modem processor may be integrated in the processor 710. The application processor primarily processes an operating system, user interfaces, application programs or instructions, and the like. The modem processor primarily processes radio communication, for example, being a baseband processor. It can be understood that the modem processor may alternatively be not integrated in the processor 710.

The processor 710 is configured to obtain N CSI report configurations, where the N CSI report configurations are used for determining M pieces of first information.

The radio frequency unit 701 is configured to send a first CSI report, where the first CSI report is calculated based on the M pieces of first information.

The first information is any one of the following: first reference signal resource, and first parameter corresponding to the first reference signal resource; N is a positive integer; and M is an integer greater than 1.

It should be noted that the terminal 700 in this embodiment can implement the processes of the method embodiment corresponding to FIG. 2 in the embodiments of this application, with the same beneficial effects achieved. To avoid repetition, details are not described herein again.

An embodiment of this application further provides a network-side device including a processor and a communication interface. The communication interface is configured to: send N CSI report configurations, where the N CSI report configurations are used for determining M pieces of first information; and receive a first CSI report, where the first CSI report is calculated based on the M pieces of first information; where the first information is any one of the following: first reference signal resource, and first parameter corresponding to the first reference signal resource; N is a positive integer; and M is an integer greater than 1. It should be noted that the network-side device embodiment corresponds to the foregoing method embodiment on the network-side device side. All implementation processes and implementations of the foregoing method embodiment are applicable to this network-side device embodiment, with the same technical effects achieved.

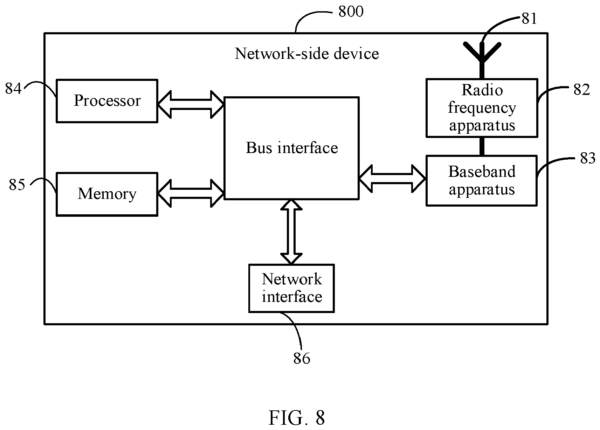

Specifically, an embodiment of this application further provides a network-side device. As shown in FIG. 8, the network device 800 includes an antenna 81, a radio frequency apparatus 82, and a baseband apparatus 83. The antenna 81 is connected to the radio frequency apparatus 82. In an uplink direction, the radio frequency apparatus 82 receives information via the antenna 81, and transmits the received information to the baseband apparatus 83 for processing. In a downlink direction, the baseband apparatus 83 processes to-be-transmitted information, and transmits the information to the radio frequency apparatus 82; and the radio frequency apparatus 82 processes the received information and then transmits the information via the antenna 81.

The frequency band processing apparatus may be located in the baseband apparatus 83. The method executed by the network-side device in the foregoing embodiments may be implemented in the baseband apparatus 83, and the baseband apparatus 83 includes a processor 84 and a memory 85.

The baseband apparatus 83 may include, for example, at least one baseband processing unit, where a plurality of chips are disposed on the baseband processing unit. As shown in FIG. 8, one of the chips is, for example, the processor 84, and connected to the memory 85, to invoke the program in the memory 85 to perform the operations of the network device shown in the method embodiment corresponding to FIG. 3.

The baseband apparatus 83 may further include a network interface 86, configured to exchange information with the radio frequency apparatus 82, where the interface is, for example, a common public radio interface (Common Public Radio Interface, CPRI).

Specifically, the network-side device in this embodiment of the present invention further includes: instructions or a program stored in the memory 85 and capable of running on the processor 84. The processor 84 invokes the instructions or program in the memory 85 to execute the method executed by the modules shown in FIG. 5, with the same technical effects achieved. To avoid repetition, details are not described herein again.

An embodiment of this application further provides a readable storage medium. The readable storage medium may be non-volatile or volatile. The readable storage medium stores a program or instructions. When the program or instructions are executed by a processor, the processes of the foregoing method embodiments shown in FIG. 2 and FIG. 3 are implemented, with the same technical effects achieved. To avoid repetition, details are not described herein again.

The processor is a processor in the terminal described in the foregoing embodiment. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions to implement the processes of the method embodiments corresponding to FIG. 2 and FIG. 3, with the same technical effects achieved. To avoid repetition, details are not described herein again.

It should be understood that the chip mentioned in embodiment of this application may also be referred to as a system-level chip, a system chip, a system on a chip, system-on-chip, or the like.

An embodiment of this application further provides a computer program product, where the computer program product is stored in a non-transitory storage medium. When the computer program product is executed by at least one processor, the processes of the foregoing method embodiment in FIG. 2 or FIG. 3 are implemented, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from that described, and various steps may be added, omitted, or combined. In addition, features described with reference to some examples may be combined in other examples.

According to the description of the foregoing embodiments, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred embodiment. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

Persons of ordinary skill in the art will appreciate that the units and algorithm steps of various examples described with reference to the embodiments disclosed in this specification can be implemented by using electronic hardware or a combination of computer software and electronic hardware. Whether the functions are executed by hardware or software depends on particular applications and design constraints of the technical solutions. Persons skilled in the art can employ a different method to implement the described functions for each particular application, but such implementations shall not be construed as going beyond the scope of this application.

It will be clearly understood by persons skilled in the art that, for ease and brevity of description, for a detailed operating process of the foregoing system, apparatus, or unit, reference may be made to a corresponding process in the foregoing method embodiments, and details are not described herein again.

In the embodiments provided in this application, it should be understood that the disclosed apparatus and method may be implemented in other manners. For example, the described apparatus embodiment is merely an example. For example, the unit division is merely logical function division and may be other division in actual implementation. For example, multiple units or components may be combined or integrated into another system, or some features may be ignored or may not be performed. In addition, the displayed or discussed mutual couplings, direct couplings or communication connections may be indirect couplings or communication connections through some interfaces, apparatuses or units, and may be in electrical, mechanical, or other forms.

The units described as separate parts may or may not be physically separate. Parts displayed as units may or may not be physical units, meaning they may be located in one position or distributed on a plurality of network units. Some or all of the units may be selected depending on actual requirements to achieve the objectives of the solutions of the embodiments.

In addition, function units in the embodiments of the present disclosure may be integrated into one processing unit, or each of the units may exist alone physically, or two or more units are integrated into one unit.

When the functions are implemented in a form of a software functional unit and sold or used as an independent product, the functions may be stored in a computer-readable medium. Based on such an understanding, the technical solutions of the application substantially or parts making contributions to the related art or part of the technical solutions may be embodied in form of software product, and the computer software product is stored in a storage medium, including a plurality of instructions configured to enable a computer device (which may be a personal computer, a server, a network device or the like) to execute all or part of the steps of the method in each embodiment of the application. The foregoing storage medium includes: any medium that can store program code, such as a USB flash drive, a removable hard disk, a ROM, a RAM, a magnetic disk, or an optical disc.

A person of ordinary skill in the art may understand that all or some of the processes of the methods in the embodiments may be implemented by a computer program controlling relevant hardware. The program may be stored in a computer readable storage medium. When the program runs, the processes of the method embodiments may be included. The storage medium may be a magnetic disk, an optical disc, a ROM, a RAM, or the like.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A channel state information CSI feedback method, comprising:
obtaining, by a terminal, N CSI report configurations, wherein the N CSI report configurations are used for determining M pieces of first information; and
sending, by the terminal, a first CSI report, wherein the first CSI report is calculated based on the M pieces of first information; wherein
the first information is any one of the following: first reference signal resource, and first parameter corresponding to the first reference signal resource; N is a positive integer; and M is an integer greater than 1.

2. The method according to claim 1, wherein the N CSI report configurations are configured with P first fields, and the first CSI report is calculated based on the M pieces of first information and the P first fields, wherein P is a positive integer.

3. The method according to claim 1, wherein in a case that N is equal to 1, the CSI report configuration satisfies any one of the following:
the CSI report configuration is configured with M first fields, wherein the M first fields correspond to the M pieces of first information; and
the CSI report configuration is configured with one first field, wherein the first field corresponds to restriction information, and the restriction information corresponds to the M pieces of first information.

4. The method according to claim 1, wherein in a case that N is equal to M, M first fields configured in M CSI report configurations correspond to the M pieces of first information; wherein
each CSI report configuration is configured with one of the M first fields.

5. The method according to claim 4, wherein that M first fields configured in M CSI report configurations correspond to the M pieces of first information satisfies any one of the following:
the M pieces of first information are configured in a first CSI report configuration, and the M first fields configured in the M CSI report configurations correspond to the M pieces of first information, the first CSI report configuration being one of the M CSI report configurations; and
the M pieces of first information are configured in the M CSI report configurations, and a first field configured in a second CSI report configuration corresponds to the first information configured in the second CSI report configuration, the second CSI report configuration being any one of the M CSI report configurations.

6. The method according to claim 1, wherein at least one of the N CSI report configurations is configured with unequal quantities of interference measurement resources IMRs and channel measurement resources CMRs.

7. The method according to claim 6, wherein after the terminal obtains the N CSI report configurations and before the terminal sends a CSI report, the method further comprises:
obtaining, by the terminal based on a quasi co-location QCL assumption of all CMRs corresponding to a first IMR, a first interference measurement result for the first IMR; wherein
the first IMR is any one of the IMRs configured in the N CSI report configurations; and the first CSI report is calculated based on the first interference measurement result.

8. The method according to claim 7, wherein in a case that N is greater than 1 and the first IMR corresponds to at least two CMRs, the at least two CMRs are configured by at least one of the N CSI report configurations.

9. The method according to claim 6, wherein a correspondence between the IMRs and CMRs configured in the N CSI report configurations is indicated by any one of the following: higher layer signaling; and media access control MAC control element CE.

10. The method according to claim 1, wherein in a case that a quantity of IMRs configured in a second CSI report configuration is 1, any one of the following is satisfied:
the IMR configured in the second CSI report configuration corresponds to all CMRs configured in the second CSI report configuration; and
in a case that N is greater than 1, the IMR configured in the second CSI report configuration corresponds to all CMRs configured in the N CSI report configurations; wherein
the second CSI report configuration is any one of the N CSI report configurations.

11. The method according to claim 1, wherein IMRs configured in the N CSI report configurations are configured with QCL assumptions.

12. The method according to claim 11, wherein after the terminal obtains the N CSI report configurations and before the terminal sends a CSI report, the method further comprises:
obtaining, by the terminal, a second interference measurement result for a second IMR based on R QCL assumptions configured for the second IMR; wherein
the second IMR is any one of the IMRs configured in the N CSI report configurations; the first CSI report is calculated based on the second interference measurement result; and R is a positive integer.

13. The method according to claim 12, wherein after the terminal obtains the N CSI report configurations and before the terminal sends a CSI report, the method further comprises:
obtaining, by the terminal based on QCL assumptions corresponding to R first CMRs, a first channel measurement result for the R first CMRs; wherein
the R first CMRs are CMRs that are configured in the N CSI report configurations and that have the same QCL assumption as the second IMR; and the first CSI report is further calculated based on the first channel measurement result.

14. The method according to claim 1, wherein the first parameter comprises at least one of the following: CMR group; CMR set; TRP identification information; and QCL assumption.

15. The method according to any one of claims 2 to 5, wherein the first field comprises at least one of the following: codebook configuration field; non-precoding matrix port indication field; report configuration type field; report quantity field; channel quality indicator CQI table field; and subband size field.

16. The method according to claim 1, wherein the N CSI report configurations are indicated by higher layer signaling or MAC CE.

17. A CSI feedback method, comprising:
sending, by a network-side device, N CSI report configurations, wherein the N CSI report configurations are used for determining M pieces of first information; and
receiving, by the network-side device, a first CSI report, wherein the first CSI report is calculated based on the M pieces of first information; wherein
the first information is any one of the following: first reference signal resource, and first parameter corresponding to the first reference signal resource; N is a positive integer; and M is an integer greater than 1.

18. The method according to claim 17, wherein the N CSI report configurations are configured with P first fields, and the first CSI report is calculated based on the M pieces of first information and the P first fields, wherein P is a positive integer.

19. The method according to claim 17, wherein in a case that N is equal to 1, the CSI report configuration satisfies any one of the following:
the CSI report configuration is configured with M first fields, wherein the M first fields correspond to the M pieces of first information; and
the CSI report configuration is configured with one first field, wherein the first field corresponds to restriction information, and the restriction information corresponds to the M pieces of first information.

20. The method according to claim 17, wherein in a case that N is equal to M, M first fields configured in M CSI report configurations correspond to the M pieces of first information; wherein
each CSI report configuration is configured with one of the M first fields.

21. The method according to claim 20, wherein that M first fields configured in M CSI report configurations correspond to the M pieces of first information satisfies any one of the following:
the M pieces of first information are configured in a first CSI report configuration, and the M first fields configured in the M CSI report configurations correspond to the M pieces of first information, the first CSI report configuration being one of the M CSI report configurations; and
the M pieces of first information are configured in the M CSI report configurations, and a first field configured in a second CSI report configuration corresponds to the first information configured in the second CSI report configuration, the second CSI report configuration being any one of the M CSI report configurations.

22. The method according to claim 17, wherein at least one of the N CSI report configurations is configured with unequal quantities of interference measurement resources IMRs and channel measurement resources CMRs.

23. The method according to claim 22, wherein after the terminal obtains the N CSI report configurations and before the terminal sends a CSI report, the method further comprises:
obtaining, by the terminal based on a quasi co-location QCL assumption of all CMRs corresponding to a first IMR, a first interference measurement result for the first IMR; wherein
the first IMR is any one of the IMRs configured in the N CSI report configurations; and the first CSI report is calculated based on the first interference measurement result.

24. The method according to claim 23, wherein in a case that N is greater than 1 and the first IMR corresponds to at least two CMRs, the at least two CMRs are configured by at least one of the N CSI report configurations.

25. The method according to claim 22, wherein a correspondence between the IMRs and CMRs configured in the N CSI report configurations is indicated by any one of the following: higher layer signaling; and media access control MAC control element CE.

26. The method according to claim 17, wherein in a case that a quantity of IMRs configured in a second CSI report configuration is 1, any one of the following is satisfied:
the IMR configured in the second CSI report configuration corresponds to all CMRs configured in the second CSI report configuration; and
in a case that N is greater than 1, the IMR configured in the second CSI report configuration corresponds to all CMRs configured in the N CSI report configurations; wherein
the second CSI report configuration is any one of the N CSI report configurations.

27. The method according to claim 17, wherein IMRs configured in the N CSI report configurations are configured with QCL assumptions.

28. The method according to claim 17, wherein the first parameter comprises at least one of the following: CMR group; CMR set; TRP identification information; and QCL assumption.

29. The method according to any one of claims 18 to 21, wherein the first field comprises at least one of the following: codebook configuration field; non-precoding matrix port indication field; report configuration type field; report quantity field; channel quality indicator CQI table field; and subband size field.

30. The method according to claim 17, wherein the N CSI report configurations are indicated by higher layer signaling or MAC CE.

31. A CSI feedback apparatus, comprising:
a first obtaining module configured to obtain N CSI report configurations, wherein the N CSI report configurations are used for determining M pieces of first information; and
a first sending module configured to send a first CSI report, wherein the first CSI report is calculated based on the M pieces of first information; wherein
the first information is any one of the following: first reference signal resource, and first parameter corresponding to the first reference signal resource; N is a positive integer; and M is an integer greater than 1.

32. The CSI feedback apparatus according to claim 31, wherein the N CSI report configurations are configured with P first fields, and the first CSI report is calculated based on the M pieces of first information and the P first fields, wherein P is a positive integer.

33. The CSI feedback apparatus according to claim 31, wherein at least one of the N CSI report configurations is configured with unequal quantities of interference measurement resources IMRs and channel measurement resources CMRs.

34. The CSI feedback apparatus according to claim 31, wherein IMRs configured in the N CSI report configurations are configured with QCL assumptions.

35. A CSI feedback apparatus, comprising:
a second sending module configured to send N CSI report configurations, wherein the N CSI report configurations are used for determining M pieces of first information; and
a first receiving module configured to receive a first CSI report, wherein the first CSI report is calculated based on the M pieces of first information; wherein
the first information is any one of the following: first reference signal resource, and first parameter corresponding to the first reference signal resource; N is a positive integer; and M is an integer greater than 1.

36. A terminal, comprising a processor, a memory, and a program or instructions stored in the memory and executable on the processor, wherein when the program or instructions are executed by the processor, the steps of the CSI feedback method according to any one of claims 1 to 16 are implemented.

37. A network-side device, comprising a processor, a memory, and a program or instructions stored in the memory and executable on the processor, wherein when the program or instructions are executed by the processor, the steps of the CSI feedback method according to any one of claims 17 to 30 are implemented.

38. A readable storage medium, wherein the readable storage medium stores a program or instructions, and when the program or instructions are executed by a processor, the steps of the CSI feedback method according to any one of claims 1 to 16 are implemented, or the steps of the CSI feedback method according to any one of claims 17 to 30 are implemented.

39. A chip, comprising a processor and a communication interface, wherein the communication interface is coupled to the processor, and the processor is configured to execute a program or instructions to implement the steps of the CSI feedback method according to any one of claims 1 to 16 or to implement the steps of the CSI feedback method according to any one of claims 17 to 30.

40. A computer program product, wherein the computer program product is stored in a non-transitory storage medium, and the computer program product is executed by at least one processor to implement the steps of the CSI feedback method according to any one of claims 1 to 16 or to implement the steps of the CSI feedback method according to any one of claims 17 to 30.

41. A communication device, configured to perform the steps of the CSI feedback method according to any one of claims 1 to 16, or the steps of the CSI feedback method according to any one of claims 17 to 30.
